**Europäisches Patentamt**

**European Patent Office**

**Office européen des brevets**

(19)

(11) Veröffentlichungsnummer: **0 216 098**
**B1**

(12)

# EUROPÄISCHE PATENTSCHRIFT

(45) Veröffentlichungstag der Patentschrift:
**31.01.90**

(21) Anmeldenummer: **86110971.8**

(22) Anmeldetag: **08.08.86**

(51) Int. Cl.⁴: **A01D 17/08,** A01D 17/00,
A01D 17/10, B65G 23/24

(54) **Siebfördervorrichtung.**

(30) Priorität: **11.09.85 DE 3532393**

(43) Veröffentlichungstag der Anmeldung:
**01.04.87 Patentblatt 87/14**

(45) Bekanntmachung des Hinweises auf die Patenterteilung:
**31.01.90 Patentblatt 90/5**

(84) Benannte Vertragsstaaten:
**BE CH DE FR GB LI NL SE**

(56) Entgegenhaltungen:
**DD-A- 139 984**
**DE-A- 2 840 427**
**DE-A- 3 109 209**
**DE-A- 3 235 087**
**DE-B- 1 072 422**
**DE-C- 674 377**
**US-A- 3 633 677**

(73) Patentinhaber: **Franz Grimme Landmaschinenfabrik GmbH & Co. KG., Wiesenstrasse 10,
D-2845 Damme 1(DE)**

(72) Erfinder: **Welp, Johannes, Steinfelder Strasse,
D-2845 Damme/Dümmer(DE)**

(74) Vertreter: **Busse & Busse Patentanwälte,
Postfach 1226 Grosshandelsring 6,
D-4500 Osnabrück(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Siebfördervorrichtung für Hackfruchterntemaschinen gemäß dem Oberbegriff des Anspruchs 1.

Siebfördervorrichtungen dieser Art sind üblicher Bestandteil von insbesondere Kartoffelerntemaschinen, und das Siebförderband erstreckt sich in Kartoffelerntemaschinen in der Regel von einer Rodevorrichtung zu einem Weiterförderer, z.B. Höhenförderer. Das Siebförderband umfaßt zumindest zwei außenrandseitige Riemen, die auf ihrer Oberseite quergerichtete,im Abstand nebeneinander verlaufende Querstäbe tragen. Während der Förderung auf dem Fördertrum des Siebförderbandes werden von dem aufgenommenen Erntegut mitaufgenommenes Erdreich etc. abgesiebt.

Zur Verstärkung des Siebeffektes ist es bekannt, das Fördertrum des Siebförderbandes in Querschwingungen zu versetzen, die beispielsweise durch von Klopfgeräten in die Riemen des Siebförderbandes eingetragene Stöße erzeugt werden. Bei einer Sortiervorrichtung für Kartoffeln finden zur Erzeugung von Querschwingungen bzw. Schüttelbewegungen im Arbeitstrum eines Endlosförderers unrunde Umlenkrollen Verwendung (DE-OS 28 40 427). Die Verwendung unrunder Räder ist auch bei Siebfördervorrichtungen von Hackfruchterntemaschinen bekannt (DE-PS 674 377), um die Siebfördervorrichtung in Querschwingungen zu versetzen. Die unrunden Räder bilden dabei jedoch Laufräder, mit denen sich die Siebfördervorrichtung auf dem Boden abstützt, so daß bei einer Vorbewegung der Vorrichtung diese als Ganzes in auf- und abgerichtete Schüttelbewegungen versetzt wird.

Schließlich ist eine Siebfördervorrichtung für Hackfruchterntemaschinen gemäß dem Oberbegriff des Anspruchs 1 bekannt (DE-OS 32 35 087), bei der eine Bewegungsvorrichtung die Siebfördervorrichtung in eine Schüttelbewegung versetzt, die dem Arbeitstrum des Siebförderbandes eine Hinund Herbewegung im wesentlichen in der Ebene des Arbeitstrums erteilt. Hierzu ist die Siebfördervorrichtung in einer Schwinggelenkaufhängung aufgehängt, und es ist ein Exzenterschwungrad vorgesehen, das die Siebfördervorrichtung in ihrer Gesamtheit in Schwingungen in und entgegen Förderrichtung versetzt.

Querschwingungen im Arbeitstrum eines Siebförderbandes erhöhen zwar den Absiebeffekt, versetzen aber auch zurückbleibende Kartoffeln in Springbewegungen, die Beschädigungsgefahren bedingen und bei schräg ansteigender Anordnung des Arbeitstrum dazu führen können, daß die Kartoffeln entgegen der Förderrichtung auf dem Arbeitstrum zurückrollen. Bei Längsschüttelbewegungen der gesamten Siebfördervorrichtung sind Springbewegungen der Kartoffeln vermieden, jedoch erfordert eine Schwinggelenkaufhängung einen erheblichen Bau- und die Schwingungserzeugung einen erheblichen Energieaufwand. Da Siebförderbänder von Kartoffelerntemaschinen mitsamt dem während des Betriebs auf ihrem Fördertrum aufliegenden Aushub eine erhebliche Masse darbieten, versetzen Schüttelbewegungen der Siebför

dervorrichtung die gesamte Erntemaschine in eine unerwünschte Mitschwingung. Dem Schwingungsverlauf sind in Frequenz und Amplitude auch dadurch enge Grenzen gesetzt.

Der Erfindung liegt die Aufgabe zugrunde, eine Siebfördervorrichtung gemäß dem Oberbegriff des Anspruchs 1 mit geringem Bauaufwand in der Siebförderleistung zu verbessern, und die Erfindung löst diese Aufgabe mit einer Antriebsvorrichtung gemäß dem kennzeichnenden Teil des Anspruchs 1. Hinsichtlich wesentlicher weiterer Ausgestaltungen wird auf die Ansprüche 2 bis 6 verwiesen.

Bei der Siebfördervorrichtung nach der Erfindung wird das Fördertrum des Siebförderbandes periodischen Beschleunigungen und Verzögerungen ausgesetzt, die eine von Querkräften freie, zur Ebene des Arbeitstrums des Siebförderbandesparallele Längsschwingung in der geförderten Aushubmasse erzeugen, die ohne Gefahren für die zuverlässige und beschädigungsfreie Förderung der Kartoffeln die Siebwirkung auf das Erdreich wesentlich erhöht. Der bauliche Aufwand ist dabei ebenso wie der Kraftbedarf vergleichsweise gering. Die Änderungen der Winkelgeschwindigkeit der Antriebsrollen innerhalb jeder vollen Umdrehung sind leicht und fein einstellbar.

Ein Ausführungsbeispiel des Gegenstands der Erfindung ist in der Zeichnung schematisch näher veranschaulicht. In der Zeichnung zeigen:

Fig. 1 eine perspektivische abgebrochene Ausschnittdarstellung der Siebfördervorrichtung nach der Erfindung,

Fig. 2 eine Schemadarstellung der wesentlichen Bestandteile des Wandelgetriebes gemäß Fig. 1 in Grundstellung der Teile,

Fig. 3 eine Darstellung ähnlich Fig. 2 zur Veranschaulichung der Teile eines Wandelgetriebes in einer von zahlreichen möglichen Einstellungen für einen Wandelbetrieb, und

Fig. 4-7 Schemadarstellungen der Teile des Wandlergetriebes in der Einstellung gemäß Fig. 3 in vier Phasen einer vollen Umdrehung der Ausgangswelle des Wandelgetriebes.

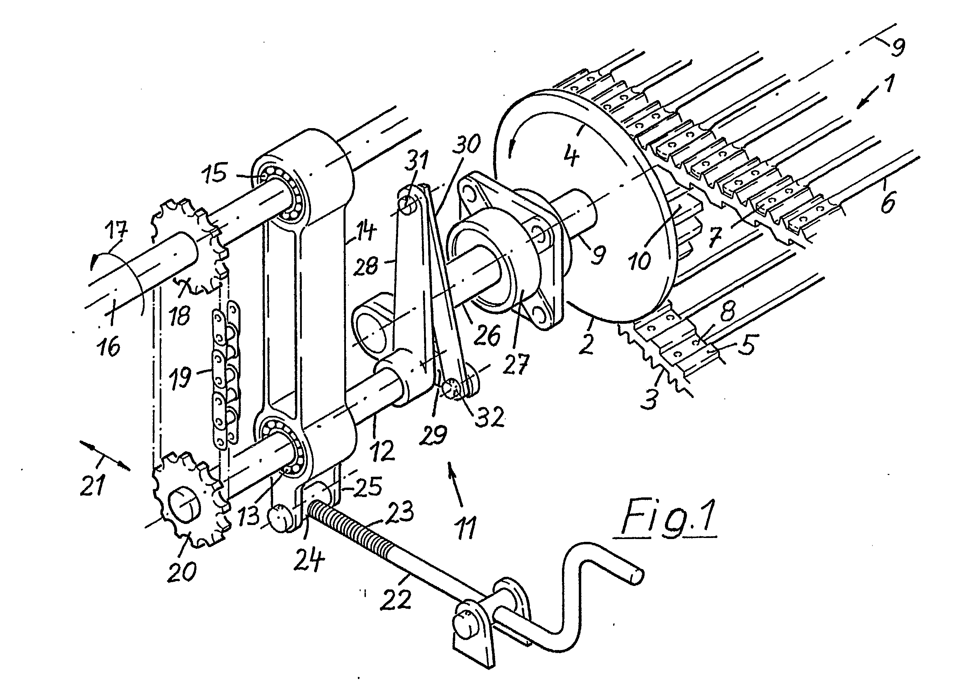

Die Fig. 1 veranschaulicht die erfindungsgemäße Siebfördervorrichtung für Hackfruchterntemaschinen, insbesondere Kartoffelerntemaschinen, lediglich in einem Ausschnitt, in dem ein Teil eines Siebförderbandes 1 und eine Antriebsrolle 2 sichtbar sind. Das Siebförderband 1 weist an jedem seiner Längsränder einen Riemen 3 auf, von denen nur der in Laufrichtung gemäß Pfeil 4 des Siebförderbandes 1 linke Riemen 3 sichtbar ist. Bei sehr breiten Siebförderbändern 1, wie sie beispielsweise für zwei-oder mehrreihige Erntemaschinen Anwendung finden, können zwischen den außenliegenden Riemen 3 auch noch parallele Zwischenriemen vorgesehen sein. Bei dem dargestellten Beispiel sind die Riemen 3 als Zahnriemen ausgebildet, d.h. sie haben an ihrer Innenseite im Abstand zueinander verlaufende Mitnehmernocken 5.

Die Riemen 3 sind jeweils untereinander durch Querstäbe 6 verbunden, die im Abstand zueinander quer zur Laufrichtung 4 aufeinanderfolgen und im Bereich ihrer Enden 7 durch Niete 8 mit den Riemen 3 verbunden sind.

Das Siebförderband 1 umläuft nicht dargestellte Umlenkrollen sowie Antriebsrollen, die zumeist im Umlenkbereich am rückwärtigen Ende des Fördertrums angeordnet sind. Je Riemen 3 ist jeweils eine Umlenkrolle und auch eine Antriebsrolle 2 vorgesehen, und es versteht sich, daß zusammengehörige Umlenkrollen bzw. Antriebsrollen 2 gleichachsig angeordnet sind. Die Antriebsrollen 2 sind auf einer Antriebs welle 9 angeordnet und im übrigen mit Mitnehmerstegen 10 im Bereich ihrer Laufspur versehen, die mit den Mitnehmernocken 8 der Riemen 3 zusammenwirken.

Die Abstützung der Teile der Siebfördervorrichtung, d.h. des Siebförderbandes 1, der Umlenkrollen und der Antriebsrollen 2 samt Antriebswelle 9,kann durch einen Rahmen erfolgen, jedoch können hierfür auch bei integriertem Einbau in eine Hackfruchterntemaschine Teile dieser Maschine wie Gestellwände, Streben etc. herangezogen sein.

Für den Antrieb der Antriebsrollen 2 ist erfindungsgemäß eine Antriebsvorrichtung vorgesehen, die den Antriebsrollen 2 eine Rotationsbewegung mit sich innerhalb jeder vollen Umdrehung regelmäßig ändernder Winkelgeschwindigkeit erteilt. Die Antriebsvorrichtung kann dabei von einem Druckmittelmotor, insbesondere Hydraulikmotor, mit einer Regelvorrichtung gebildet sein, die der Ausgangswelle dieses Motors innerhalb jeder vollen Umdrehung eine regelmäßige Änderung der Winkelgeschwindigkeit vorgibt. Ein derartiger Motor könnte unmittelbar mit der Antriebswelle 9 für die Antriebsrollen 2 verbunden werden.

Bevorzugt ist jedoch eine Antriebsvorrichtung, die ein Wandelgetriebe 11 umfaßt , das einem üblichen Antriebsmotor, dessen Welle mit konstanter Winkelgeschwindigkeit umläuft, nachgeordnet ist. Eine solche Ausführung hat den Vorteil, daß irgendein üblicher bzw. ohnehin vorhandener Primärantrieb genutzt werden kann, z.B. der Antriebsmotor des die Hackfruchterntemaschine ziehenden landwirtschaftlichen Schleppers, zu dem eine Antriebsverbindung mit Hilfe einer Zapfwelle herstellbar ist.

Das Wandelgetriebe ist, wie das beim dargestellten Wandelgetriebe 11 der Fall ist, bevorzugt ein mechanisches Getriebe, das eine Rotationseingangsbewegung mit innerhalb jeder vollen Umdrehung gleichbleibender Winkelgeschwindigkeit in eine Rotationsausgangsbewegung mit sich ändernder Winkelgeschwindigkeit innerhalb jeder vollen Umdrehung umwandelt.

Das dargestellte Wandelgetriebe ist besonders einfach, billig, robust und dabei außerordentlich fein einstellbar. Es umfaßt eine Eingangswelle 12, die in einem Lager 13 einer Schwinge 14 gelagert ist. Diese Schwinge 14 ist ihrerseits um eine zur Drehachse der Eingangswelle 12 parallele Stellachse verschwenk- und feststellbar gelagert, und zwar bei dem dargestellten Beispiel mittels eines Lagers 15 auf einer Antriebswelle 16 eines Primärantriebs irgendeiner geeigneten Art. Diese Antriebswelle 16 läuft in Richtung des Pfeiles 17 im Betrieb der Siebfördervorrichtung mit konstanter Drehzahl und konstanter Winkelgeschwindigkeit innerhalb jeder vollen Umdrehung um. Die Antriebswelle 16 trägt ein Kettenrad 18 und treibt über dieses eine Rollenkette 19 und ein Kettenrad 20, das fest auf der Eingangswelle 12 angebracht ist, letztere an. Schwenk-Verstellbewegungen der Schwinge 14 in Richtung der Pfeile 21 sind dementsprechend ohne Rückwirkungen auf den Fortbestand der Antriebsverbindung möglich.

Zur Ver- und Feststellung der Schwinge 14 dient bei dem dargestellten Beispiel eine Handspindel 22, die ein selbsthemmendes Gewinde 23 aufweist und damit ein Innengewindestück 24 durchgreift, das um eine zur Drehachse der Eingangswelle 12 parallele Achse schwenkbar in einem unteren Gabelteil 25 der Schwinge 14 gelagert ist.

Das Wandelgetriebe 11 umfaßt weiterhin eine Ausgangswelle 26, die ortsfest in einem Lager 27 gelagert ist, sich koaxial zur Antriebswelle 9 für die Antriebsrollen 2 erstreckt und mit der Antriebswelle 9 gekuppelt ist. Ausgangswelle 26 des Wandelgetriebes 11 und Antriebswelle 9 für die Antriebsrollen 2 können auch aus einem Stück bestehen.

Auf ihrem der Ausgangswelle 26 zugewandten Ende trägt die Eingangswelle 12 einen fest mit ihr verbundenen radialen Hebel 28, und auch die Ausgangswelle 6 ist an ihrem der Eingangswelle 12 zugewandten Ende mit einem Radialhebel 29 verbunden.

Die freien Enden dieser radialen Hebel 28,29 sind durch einen seinerseits in einer Radialebene verlaufenden Lenker 30 miteinander verbunden, der an den Hebelenden bei 31 und 32 gelenkig angreift.

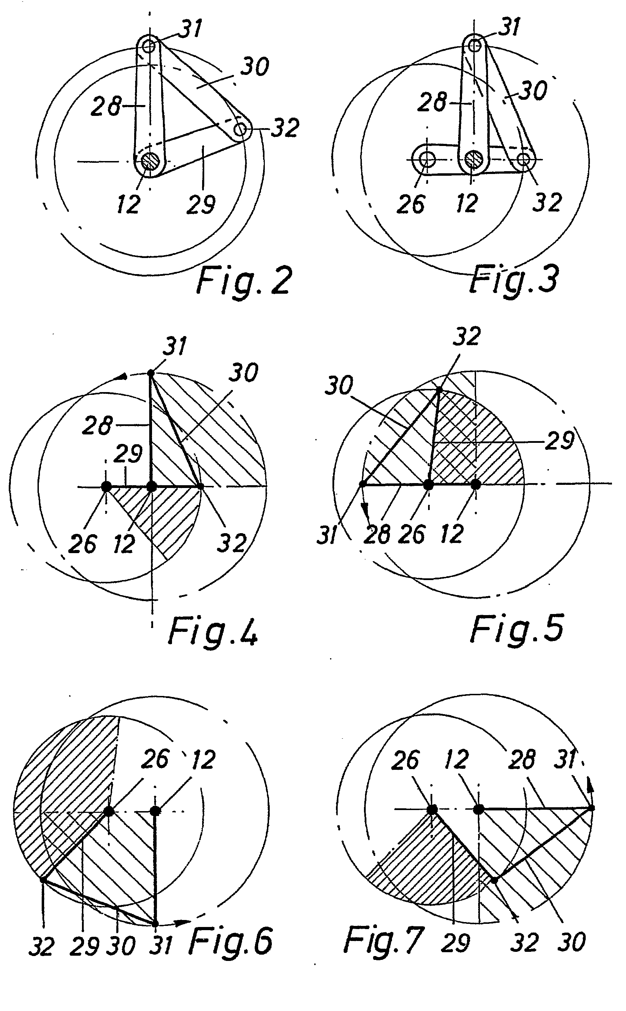

In einer Grund- oder Null-Stellung fluchtet die Drehachse der Eingangswelle 12 mit der der Ausgangswelle 26, wie dies in der schematischen Darstellung in Fig. 2 veranschaulicht ist. In dieser Stellung der Teile hat die Ausgangswelle 26 wie die Eingangswelle 12 eine konstante Winkelgeschwindigkeit beim Umlauf, d.h. die Wandelwirkung ist Null.

Die Fig. 3 veranschaulicht in einer der Fig. 2 entsprechenden schematischen Darstellung eine Wandelbetriebsstellung von vielen möglichen Betriebsstellungen bei der durch Verschwenken der Schwinge 14 die Eingangswelle 12 in eine Stellung verbracht ist, in der ihre Drehachse im Abstand parallel zu der der Ausgangswelle 26 verläuft. Durch Vergrößern oder Verkleinern des Abstandes zwischen den Drehachsen der Wellen 12,26 läßt sich die Verlaufskurve der Änderung der Winkelgeschwindigkeit für die Ausgangswelle 26 über die Zeit verändern. Diese Änderung betrifft die Amplitude, d.h. die maximale Differenz zwischen der Winkelgeschwindigkeit der Eingangswelle 12 und der Winkelgeschwindigkeit der Ausgangswelle 26. Bei dem dargestellten Wandelgetriebe 11 findet je voller Umdrehung der Eingangswelle 12 eine Änderung der Winkelgeschwindigkeit der Ausgangswelle 26 innerhalb eines einzigen Winkelbereichs statt. Eine Frequenzänderung ist in diesem Falle durch Einstellungsveränderung nicht möglich. Durch Abmessungsveränderungen bei den Hebeln 28,29 und dem Lenker 30 läßt sich bezogen auf jede volle Umdrehung der Eingangswelle 12 der Winkelbereich verändern, innerhalb dem die Winkelgeschwindigkeit der Ausgangswelle 26 von der der Eingangswelle 12 abweicht. Dies gilt auch für die Verlaufsform der Änderungskurve der Winkelgeschwindigkeit der Ausgangswelle 26 über der Zeit. Bei Ausbildung der Antriebsvorrichtung als Druckmittelmotor mit Regelvorrichtung oder bei anderer Gestaltung des Wandelgetriebes ist es ohne weiteres auch möglich, neben der Amplitude auch die Frequenz zu ändern, z.B. innerhalb jeder vollen Umdrehung der Ausgangswelle 26 dieser Winkelgeschwindigkeitsänderungen innerhalb von zwei Teilwinkelbereichen vorzugeben.

Wie der Fig. 4 entnommen werden kann, entspricht einem ersten Drehwinkelbereich O-90° der Eingangswelle 12 ein Drehwinkelbereich der Ausgangswelle 26 von 50°. Dem zweiten Drehwinkelbereich der Eingangswelle 12 von 90° - 180° gemäß Fig. 5 entspricht ein Drehwinkelbereich der Ausgangswelle 26 von 83°. Fig. 6 veranschaulicht den Zustand der Teile nach Zurücklegen eines dritten Drehwinkelbereiches von 180°-270° durch die Eingangswelle 12, und der Fig. 6 kann entnommen werden, daß diesem dritten Viertel einer vollen Umdrehung der Eingangswelle 12 ein Drehwinkelbereich der Ausgangswelle 26 von 142° entspricht. Die Fig. 7 schließlich veranschaulicht die Teile nach Zurücklegen eines weiteren Drehwinkelbereiches von 270°-360°, d.h. nach Abschluß einer 360°-Umdrehung durch die Eingangswelle 12, und läßt erkennen, daß in dieser Umdrehungsphase die Ausgangswelle 26 einen Drehwinkel von 85° zurücklegt.

Aus vorstehendem wird deutlich, daß die Winkelgeschwindigkeit der Ausgangswelle 26 innerhalb jeder vollen Umdrehung eine Veränderung erfährt, die sich entsprechend den Antriebsrollen 2 mitteilt. Dadurch erhält die Siebförderkette 1 periodische Beschleunigungen und Verzögerungen, die den auf dem Arbeitstrum des Siebförderbandes 1 vorgeförderten Aushub in einer Ebene parallel zur Oberfläche des Siebförderbandes im ganzen Bereich des Arbeitstrums in Schwingungen versetzen und dadurch den Siebeffekt auf das Erdreich verstärken. Beschleunigungen quer zur Oberfläche des Siebförderbandes 1 im Bereich dessen Arbeitstrums sind dabei wirksam vermieden.

**Patentansprüche**

1. Siebfördervorrichtung für Hackfruchterntemaschinen, mit einem Siebförderband (1), das Umlenkrollen sowie Antriebsrollen (2) umläuft, und mit einer die Antriebsrollen (2) in Umdrehung versetzenden Antriebsvorrichtung, dadurch gekennzeichnet, daß die Antriebsvorrichtung in einer ersten Einstellung, in der sie die Antriebsrollen (2) mit gleichförmiger Winkelgeschwindigkeit antreibt, in eine zweite Einstellung überführbar ist, in der sie den Antriebsrollen (2) eine Rotationsbewegung mit sich innerhalb jeder vollen Umdrehung regelmäßig ändernder Winkelgeschwindigkeit erteilt.

2. Siebfördervorrichtung nach Anspruch 1, dadurchgekennzeichnet, daß die Antriebsvorrichtung von einem Druckmittelmotor mit einer Regelvorrichtung gebildet ist, die der Ausgangswelle des Motors innerhalb jeder vollen Umdrehung eine regelmäßige Änderung der Winkelgeschwindigkeit vorgibt.

3. Siebfördervorrichtung nach Anspruch 1, dadurchgekennzeichnet, daß die Antriebsvorrichtung ein einem Antriebsmotor nachgeordnetes Wandelgetriebe (11) umfaßt, das eine Rotationseingangsbewegung mit innerhalb jeder vollen Umdrehung gleichbleibender Winkelgeschwindigkeit in eine Rotationsausgangsbewegung mit sich ändernder Winkelgeschwindigkeit innerhalb jeder vollen Umdrehung umwandelt.

4. Siebfördervorrichtung nach Anspruch 3, dadurchgekennzeichnet, daß das Wandelgetriebe (11) als mechanisches Getriebe ausgebildet ist.

5. Siebfördervorrichtung nach Anspruch 4, dadurchgekennzeichnet, daß eine Eingangswelle (12) des Wandelgetriebes (11) in einer Schwinge (14) gelagert und mittels dieser um eine zur Drehachse der Eingangswelle parallele Stellachse zwischen einer Grund- und einer Endstellung verschwenk- und feststellbar ist, daß die Drehachse einer ortsfest gelagerten Ausgangswelle (26) in der Grundstellung der Eingangswelle (12) mit deren Drehachse fluchtet, und daß die einander zugewandten Enden der Eingangs- und Ausgangswelle je mit einem radialen Hebel (28;29) versehen und die freien Enden dieser Hebel durch einen in einer Radialebene verlaufenden Lenker (30) miteinander verbunden sind.

6. Siebfördervorrichtung nach Anspruch 4, dadurchgekennzeichnet, daß die Stellachse für die Schwinge (14) von der Drehachse einer von dem Antriebsmotor angetriebenen Antriebswelle (16) gebildet, die Schwinge auf und mittels eines Stellantriebs (22,24) einstellbar ist.

**Claims**

1. A screening conveyor device for root-crop harvesting machines, having a screening conveyor belt (1) which runs round guide rollers and driving rollers (2), and having a driving device setting the driving rollers (2) in rotation, characterised in that the driving device, in a first setting in which it drives the driving rollers (2) with a uniform angular velocity, can be transferred into a second setting in which it imparts a rotational motion with an angular velocity varying regularly within each complete revolution to the driving rollers (2).

2. A screening conveyor device according to claim 1, characterised in that the driving device is formed by a pressure-fluid motor with a control device which predetermines a regular variation in the angular velocity of the output shaft of the motor within each complete revolution.

3. A screening conveyor device according to claim 1, characterised in that the driving device comprises a change-over transmission (11) which follows a driving motor and which converts a rotational input motion with an angular velocity remaining constant within each complete revolution into a rotational output motion with a varying angular velocity within each complete revolution.

4. A screening conveyor device according to claim 3, characterised in that the change-over transmission (11) is constructed in the form of a mechanical transmission.

5. A screening conveyor device according to

5. A screening conveyor device according to claim 4, characterised in that an input shaft (12) of the chage-over transmission (11) is mounted in a rocking arm (14) and can be swung about an adjustment axis parallel to the axis of rotation of the input shaft, between an initial position and an end position and located by means of the rocking arm, that the axis of rotation of a stationarily mounted output shaft (26) is in alignment with the axis of rotation of the input shaft (12) when the latter is in the initial position, and that the adjacent ends of the input and output shafts are each provided with a radial lever (28; 29) and the free ends of these levers are connected to one another by a link (30) extending in a radial plane.

6. A screening conveyor device according to claim 4, characterised in that the adjustment axis for the rocking arm (14) is formed by the axis of rotation of a driving shaft (16) driven by the driving motor, and the rocking arm is supported on this driving shaft by means of a bearing (15) and is adjustable by means of an adjusting drive (22, 24).

**Revendications**

1. Dispositif de crible convoyeur pour machine à récolter les plantes sardées, comportant un crible convoyeur (1) qui passe autour de rouleaux de renvoi et de rouleaux d'entraînement (2), et un dispositif d'entraînement qui met les rouleaux d'entraînement (2) en rotation, caractérisé en ce que le dispositif d'entraînement peut être amené à partir d'un premier état de réglage, dans lequel il entraîne les rouleaux d'entraînement (2) à une vitesse angulaire constante, à un second état de réglage, dans lequel il confère aux rouleaux d'entraînement (2) un mouvement de rotation avec vitesse angulaire régulièrement variable au cours de chaque révolution complète.

2. Dispositif de crible convoyeur suivant la revendication 1, caractérisé en ce que le dispositif d'entraînement est constitué par un moteur à agent sous pression avec un dispositif de réglage qui provoque une modification régulière de la vitesse angulaire de l'arbre de sortie du moteur au cours de chaque révolution complète.

3. Dispositif de crible convoyeur suivant la revendication 1, caractérisé en ce que le dispositif d'entraînement comprend une transmission à convertisseur (11) montée après le moteur d'entraînement et qui transforme un mouvement de rotation d'entrée à vitesse angulaire constante au cours de chaque révolution complète en un mouvement de rotation de sortie à vitesse angulaire variable au cours de chaque révolution complète.

4. Dispositif de crible convoyeur suivant la revendication 3, caractérisé en ce que la transmission à convertisseur (11) est constituée par une transmission mécanique.

5. Dispositif de crible convoyeur suivant la revendication 4, caractérisé en ce qu'un arbre d'entrée (12) de la transmission à convertisseur (11) est supporté par une bielle (14) et peut pivoter et être fixé au moyen de celle-ci entre une position de départ et une position finale en tournant autour d'un axe de réglage parallèle à l'axe de rotation de l'arbre d'entrée, que l'axe de rotation d'un arbre de sortie (26) supporté en un point fixe est aligné dans la position de départ de l'arbre d'entrée (12) avec l'axe de rotation de celui-ci et que les extrémités tournées l'une vers l'autre de l'arbre d'entrée et de l'arbre de sortie sont pourvues chacune d'un levier radial (28; 29) et les extrémités libres de ces leviers sont reliées l'une à l'autre par une trigle (30) s'étandant dans un plan radial.

6. Dispositif de crible convoyeur suivant la revendication 4, caractérisé en ce que l'axe de réglage pour la bielle (14) est constitué par l'axe de rotation d'un arbre d'entraînement (16) entraîné par le moteur d'entraînement et la bielle est supportée par un palier (15) sur cet arbre d'entraînement et peut être réglée au moyen d'une commande de réglage (22, 24).

Fig.1

EP 0 216 098 B1

Fig. 2

Fig. 3

Fig. 4

Fig. 5

Fig. 6

Fig. 7